(19) Europäisches Patentamt / European Patent Office / Office européen des brevets

(11) **EP 3 032 245 B1**

(12) **EUROPEAN PATENT SPECIFICATION**

(45) Date of publication and mention
of the grant of the patent:
**07.10.2020 Bulletin 2020/41**

(21) Application number: **14834586.1**

(22) Date of filing: **13.02.2014**

(51) Int Cl.:
***G01N 17/02*** *(2006.01)*

(86) International application number:
**PCT/JP2014/053311**

(87) International publication number:
**WO 2015/019634 (12.02.2015 Gazette 2015/06)**

(54) **CORROSION-PREVENTION-PERFORMANCE DEGRADATION DETECTION SENSOR, HOT WATER SUPPLY AND HEATING SYSTEM, AND FACILITY EQUIPMENT**

SENSOR ZUR ERKENNUNG DER LEISTUNGSVERSCHLECHTERUNG EINES KORROSIONSSCHUTZES, WARMWASSERZUFUHR- UND HEIZSYSTEM SOWIE ANLAGE DAMIT

CAPTEUR DE DÉTECTION DE DÉGRADATION DE PERFORMANCE ANTICORROSION, SYSTÈME DE FOURNITURE D'EAU CHAUDE ET DE CHAUFFAGE, ET ÉQUIPEMENT D'INSTALLATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.08.2013 JP 2013164374**

(43) Date of publication of application:
**15.06.2016 Bulletin 2016/24**

(73) Proprietor: **Mitsubishi Electric Corporation Tokyo 100-8310 (JP)**

(72) Inventors:
• **KURIKI, Hironori**
**Tokyo 100-8310 (JP)**
• **MORIMURA, Hideyuki**
**Tokyo 100-8310 (JP)**
• **MIYA, Kazuhiro**
**Tokyo 100-8310 (JP)**
• **FURUKAWA, Seiji**
**Tokyo 100-8310 (JP)**

(74) Representative: **Sajda, Wolf E.**
**Meissner Bolte Patentanwälte**
**Rechtsanwälte Partnerschaft mbB**
**Postfach 86 06 24**
**81633 München (DE)**

(56) References cited:
WO-A1-2010/078548     WO-A1-2013/065207
WO-A1-2013/065207     WO-A2-2012/088335
JP-A- 2012 220 288     JP-A- 2012 514 741

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Technical Field

The present invention relates to an anticorrosion performance degradation detection device for detecting inclusion of a corrosive factor in a solvent to which a corrosion inhibitor for inhibiting corrosion of an anticorrosion target material is added, hot water supply and heating system provided with the anticorrosion performance degradation detection device, and a facility apparatus provided therewith.

Background Art

A facility apparatus, such as a hot water supply and heating system or an air-conditioning system, includes a pipe or other component which is made of a metal material. Various techniques have been proposed for inhibiting corrosion of the metal material by adding a corrosion inhibitor to a circulating liquid. However, as the corrosion inhibitor concentration of such a facility apparatus decreases due to long-term use or other reasons, the anticorrosion performance of the circulating liquid degrades.

Consequently, the corrosion of the metal material proceeds. As the corrosion of the metal material proceeds, pitting corrosion occurs in the metal material, which eventually leads to formation of a through-hole. This results in leakage of the circulating liquid, thus significantly reducing the heat exchange performance.

To prevent the reduction of the heat exchange performance caused by the leakage of the circulating liquid in such a facility apparatus, it is necessary to inhibit corrosion of the metal material of the pipe or the like included in the system, and to properly control the concentration of the corrosion inhibitor so as not to reduce the anticorrosion performance of the circulating liquid. Patent Literature 1 discloses a method for detecting a surface state (local corrosion) of a metal by measuring impedance of an electrode having the same material as the metal material of the pipe and deriving the corrosion rate, to inhibit corrosion of a metal material of a pipe.

Patent Literature 2 discloses a method for measuring a change in impedance of an anticorrosive coating formed on an electrode surface having the same material as a pipe to detect a change in the concentration of a corrosion inhibitor in a system in which the corrosion inhibitor for inhibiting corrosion of an anticorrosion target material is added to a circulating liquid.

With this technique, the degradation of the anticorrosion performance of the circulating liquid to which the corrosion inhibitor is added can be detected beforehand. This detection can be achieved because an impurity such as iron rust (corrosive factor) that is derived from the pipe member may be included in the circulating liquid to which the corrosion inhibitor is added and because this inclusion results in another cause of degradation of the anticorrosion performance other than the degradation due to the reduction in the corrosion inhibitor concentration.

List of Citations

Patent Literature

Patent Literature 1 Unexamined Japanese Patent Application Kokai Publication JP S59-060 351 A
Patent Literature 2 Unexamined Japanese Patent Application Kokai Publication JP 2012-220 288 A.

In addition, evaluation of corrosion resistance is known from WO2010/078548 and WO2013/065207.

Summary of the Invention

Technical Problem

The technique described in Patent Literature 1 evaluates the corrosion rate by measuring an electrochemical impedance of a target electrode. Specifically, the technique described in Patent Literature 1 evaluates the magnitude of the reaction resistance of the electrode, detects the progress of corrosion of the pipe material used, and reveals the situation. Therefore, for the circulating liquid to which the corrosion inhibitor for inhibiting corrosion of a pipe or the like is added, the reduction in the concentration of the corrosion inhibitor cannot be detected before the degradation of the anticorrosion performance proceeds.

The impurities such as iron rust or the like that is a corrosive factor for the pipe as described above also attach to the anticorrosive coating to the electrode surface. Thus, in Patent Literature 2, a change in the electrochemical impedance is measured to detect inclusion of the corrosive factor in the circulating liquid. Impurities that is not the corrosive factor, however, may also attach to the anticorrosive coating.

The change in impedance may be thus detected not only due to the inclusion of the corrosive factor or the like for the pipe as described above, but also due to the inclusion of the impurities, which is not the corrosive factor, in the circulating liquid. As a result, the technique described in Patent Literature 2 does not provide highly accurate detection of whether the corrosive factor for the pipe material is included in the circulating liquid.

The present invention has been made to solve the above described problems, and it is an object to provide earlier, more accurate, and more sensitive detection of inclusion of a corrosive factor in a solvent to which a corrosion inhibitor is added.

## Solution to the Problem

To achieve the object, an anticorrosion performance degradation detection device according to the present invention, which detects inclusion of a corrosive factor in a solvent to which a corrosion inhibitor for inhibiting corrosion of an anticorrosion target material is added, includes a detection electrode, a counter electrode, a power supply, and a sensor. The detection electrode reacts with a corrosion inhibitor dissolved in the solvent to form on a surface thereof an electrode surface coating that inhibits corrosion.

The counter electrode is disposed to face the detection electrode with a predetermined distance therebetween. The power supply can apply an AC voltage and a DC voltage between the detection electrode and the counter electrode.

The sensor measures impedance of the detection electrode in at least a low frequency range and a medium frequency range among the low frequency range, the medium frequency range, and a high frequency range. The power supply applies the DC voltage when the impedance of the detection electrode in the medium frequency range decreases from a first predetermined value, and releases the applied DC voltage when the impedance of the detection electrode in the medium frequency range decreases from a second predetermined value. The sensor measures whether the impedance of the detection electrode in the low frequency range decreases from a third predetermined value after the release of the applied DC voltage.

## Advantageous Effects of the Invention

The present invention can provide earlier, more accurate, and more sensitive detection of inclusion of the corrosive factor in the solvent to which the corrosion inhibitor is added.

## Brief Description of Drawings

FIG. 1 schematically illustrates a configuration of a hot water supply and heating system provided with an anticorrosion performance degradation detection sensor according to Embodiment 1 of the present invention;
FIG. 2 schematically illustrates a configuration of the anticorrosion performance degradation detection sensor illustrated in FIG. 1;
FIG. 3 illustrates a typical electrical equivalent circuit with a simulated electrode reaction on an electrode surface;
FIG. 4 illustrates a simplified model of a correlation between an electrode surface coating formed by a corrosion inhibitor and impedance;
FIG. 5 illustrates a relation between a pH value of a solution and an electric potential of a Cu-BTA complex of an anticorrosive coating according to Embodiment 1;
FIG. 6A illustrates how a coating is decomposed and how a coating is reformed when impurities are included, by application and release of an electric field according to Embodiment 1;
FIG. 6B illustrates how a coating is decomposed and how a coating is reformed when impurities are included, by application and release of an electric field according to Embodiment 1;
FIG. 6C illustrates how a coating is decomposed and how a coating is reformed when impurities are included, by application and release of an electric field according to Embodiment 1;
FIG. 7 illustrates a change over time in an impedance response before and after decomposition and reformation of an electrode surface coating when impurities that is a corrosive factor are included in the circulating liquid;
FIG. 8 illustrates a change over time in an impedance response before and after decomposition and reformation of an electrode surface coating when impurities that is not a corrosive factor is included in the circulating liquid;
FIG. 9 illustrates a change over time in an impedance response without an operation of application and release of a DC voltage when impurities that is a corrosive factor are included in the circulating liquid;
FIG. 10 is an example of a flowchart when the inclusion of the corrosive factor is detected while switching between a medium frequency range and a low frequency range according to Embodiment 1;
FIG. 11 illustrates a schematic configuration of an an-ticorrosion performance degradation detec-tion sensor according to Embodiment 5 of the present invention; and
FIG. 12 schematically illustrates a hot water supply and heating system provided with an anticorrosion performance degradation detection sensor according to Example 3.

## Description of Embodiments

### Embodiment 1

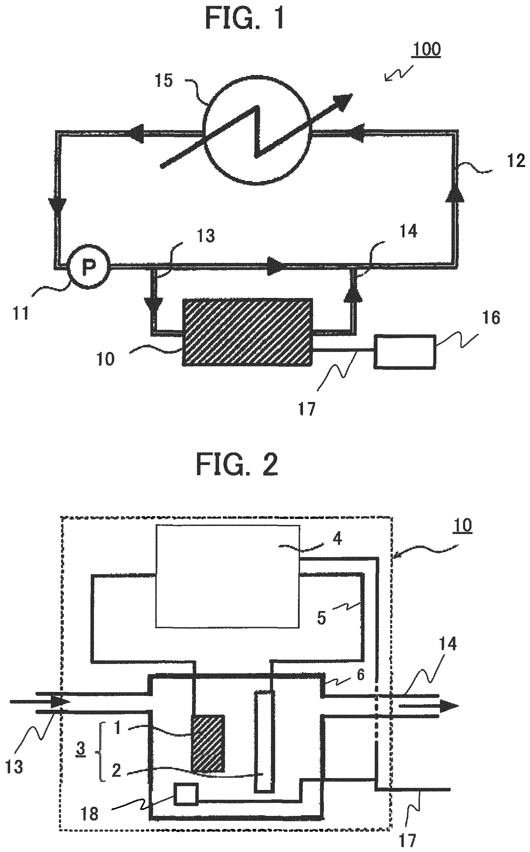

FIG. 1 schematically illustrates a configuration of a hot water supply and heating system provided with an anticorrosion performance degradation detection sensor according to Embodiment 1 of the present invention. A hot water supply and heating system 100 has a function of, for example, supplying hot water to a bathroom, a washroom, and/or a kitchen, or heating up rooms, by utilizing heat generated by a heat source unit.

As illustrated in FIG. 1, the hot water supply and heating system 100 includes a cooling target 15 including a heat exchanger or the like, a circulation line 12 connected to the cooling target 15, and a circulation pump 11 for circulating a circulating liquid through the cooling target 15 and the circulation line 12. The heat source and the heat exchanger associated with the heat source are not illustrated in FIG. 1. The cooling target 15 is, for example, a hot water supply tank or a heat exchanger for heating. The circulating liquid is a solvent in which impurities that is a corrosive factor may be included.

The hot water supply and heating system 100 includes bypass lines 13 and 14. The bypass lines 13 and 14 bypass a portion of the circulation line 12 and are connected to the anticorrosion performance degradation detection sensor 10. The anticorrosion performance degradation detection sensor 10 detects inclusion of impurities, which is a corrosive factor, in the circulating liquid. The anticorrosion performance degradation detection sensor 10 is connected to a controller 16 via a data transmission cable 17.

The circulation pump 11 circulates the circulating liquid flowing through the circulation line 12 and the bypass lines 13 and 14. The circulation pump 11 has a suction side thereof connected to the outlet side of the cooling target 15, and a discharge side thereof connected to the inlet side of the cooling target 15 and connected via the bypass line 13 to the anticorrosion performance degradation detection sensor 10. The circulation pump 11 may be a capacity-controllable pump, for example.

The circulation line 12 is a pipe connecting the various types of components. The circulation line 12 is connected via the bypass lines 13 and 14 to the anticorrosion performance degradation detection sensor 10, and is connected to the cooling target 15. Each of the bypass lines 13 and 14 is a pipe that has one end connected to the circulation line 12 and another end connected to the anticorrosion performance degradation detection sensor 10, thereby bypassing a portion of the circulation line 12.

The cooling target 15 has one end connected to the suction side of the circulation pump 11 and another end connected to the discharge side of the circulation pump 11 and the anticorrosion performance degradation detection sensor 10 via the bypass line 14.

The hot water supply and heating system 100 is essentially a system in which the circulation pump 11 is connected in the circulation line 12, which is a pipe for a circulating liquid to flow, and the circulating liquid circulates therethrough. In an area around the sensor, a portion of the circulating liquid fed from the discharge side of the circulation pump 11 flows via the bypass line 13 into the anticorrosion performance degradation detection sensor 10, and then flows again into the circulation line 12 via the bypass line 14.

The anticorrosion performance degradation detection sensor 10 detects anticorrosion performance of the circulating liquid flowing therein by impedance measurement, and the controller 16 receives the detection result through the data transmission cable 17.

The controller 16 may have a display function of informing inclusion of a corrosive factor based on the received detection result, or may include a device for sounding an alarm, or the like. The detection by impedance measurement is described in detail below. The other circulating liquid not passing through the bypass line 13 flows directly through the circulation line 12, and meets the circulating liquid flowing from the bypass line 14. The combined circulating liquid then passes through the circulation line 12 and flows into the cooling target 15. The circulating liquid passing through the cooling target 15 is fed to the suction side of the circulation pump 11.

As a result of such a flow of the circulating liquid, some of the components, which are likely to be in contact with the circulating liquid, are anticorrosion targets (anticorrosion target materials). That is, the anticorrosion targets are the circulation pump 11, the circulation line 12, the bypass lines 13 and 14, and the cooling target 15, all of which constitute a circulation circuit for the circulating liquid.

The cooling target 15, for example, corresponds to indoor and outdoor heat exchangers for efficiently transferring heat between a high temperature object and a low temperature object, a fan coil for adjusting temperature and humidity and sending air to an air-conditioned space using a fan, a radiator for releasing excessive heat generated, a hot water supply tank for storing the circulating liquid for cyclical supply, or the like (see Example 3 below).

FIG. 2 schematically illustrates a configuration of the anticorrosion performance degradation detection sensor illustrated in FIG. 1. An area bordered with dotted line in FIG. 2 corresponds to the anticorrosion performance degradation detection sensor 10 illustrated in FIG. 1. The anticorrosion performance degradation detection sensor 10 is configured to at least include a pair of electrodes 3 including a detection electrode 1 and a counter electrode 2, a power supply 4, a lead 5 connecting the power supply 4 and the pair of electrodes 3, and a housing 6 accommodating the pair of electrodes 3 and a portion of the lead 5.

The anticorrosion performance degradation detection sensor 10, as illustrated in FIG. 2, may, but not necessarily, include a thermocouple 18. As described in detail in Embodiment 6 below, the thermocouple 18 is located near the detection electrode 1 and measures the temperature of the circulating liquid. FIG. 2 illustrates a connection configuration in which the power supply 4 is connected through the data transmission cable 17 to the exterior (controller 16), but may be connected through another component.

The anticorrosion performance degradation detection sensor 10 detects a change in the state of an electrode surface coating formed on the detection electrode 1 associated with impurities included in the circulating liquid, by using electrochemical impedance measurement. The anticorrosion performance degradation detection sensor 10 also detects whether the impurities included in the circulating liquid is a corrosive factor by using an operation of application and release of the DC voltage. The detection method is described in detail below.

The anticorrosion performance degradation detection sensor 10 allows the circulating liquid that flows through the circulation line 12 of the hot water supply and heating system 100 to flow therein. The circulating liquid flowing between the pair of electrodes 3, that is, the detection electrode 1 and the counter electrode 2, is an aqueous solvent flowing through the circulation line 12.

Accordingly, the circulating liquid contains a metal of the anticorrosion target as described above, and a corrosion inhibitor for inhibiting corrosion of the metal of the detection electrode 1. In cold climate areas, an antifreeze may be added to the circulating liquid to prevent the circulating liquid from freezing.

Examples of the corrosion inhibitor may include a precipitated coating corrosion inhibitor, such as benzotriazole (BTAH) or 8-quinolinol, an adsorbed coating corrosion inhibitor, such as tetraalkylammonium, and an oxide coating corrosion inhibitor, such as sodium nitrite, sodium molybdate, or sodium polyphosphate. The corrosion inhibitor used may be an optimal corrosion inhibitor selected in accordance with the material of the anticorrosion target used in the hot water supply and heating system 100.

Specifically, if the anticorrosion target is made of copper, a precipitated coating corrosion inhibitor such as benzotriazole may preferably be used, and if the anticorrosion target is made of iron, an oxide coating corrosion inhibitor such as sodium nitrite may preferably be used.

The metal of the detection electrode 1 is eluted into the circulating liquid and the corrosion inhibitor reacts with the metal, thereby forming an electrode surface coating on the surface of the detection electrode 1. The formed electrode surface coating thus suppresses further dissolution (elution) of the detection electrode 1. The dissolution reaction and the formation reaction of the detection electrode 1 are repeated in the electrode surface coating on the surface of the detection electrode 1.

These reactions kept in equilibrium suppress the elution of the metal from the detection electrode 1, thus ensuring a stable state of the detection electrode 1. However, when the concentration of the corrosion inhibitor contained in the circulating liquid decreases due to decomposition of the corrosion inhibitor or the like, or when an inclusion of corrosive ions that corrode the detection electrode 1 or the like occurs, the equilibrium state collapses and the dissolution reaction becomes dominant. As a result, the corrosion reaction proceeds. This reaction process also occurs similarly in the anticorrosion target.

The reaction of the surface of the detection electrode 1 caused by the corrosion inhibitor is described in detail hereinafter. It is assumed here that the pipe of the anticorrosion target is made of copper and the detection electrode 1 of the anticorrosion performance degradation detection sensor 10 is also made of copper. It is also assumed that the circulating liquid circulating in the hot water supply and heating system 100 is an aqueous solvent and that propylene glycol as an antifreeze and benzotriazole as a copper corrosion inhibitor are added to the circulating liquid.

Benzotriazole is dissociated in the circulating liquid by the reaction, $BTAH \rightarrow BTA^- + H^+$, into an anion $BTA^-$. Then, the anion $BTA^-$ forms a complex, together with an copper ion $Cu^+$ dissolved in the detection electrode 1 or the pipe in the circulating liquid, and a precipitation film $[Cu\text{-}BTA]_n$ of uncharged polymer complex is formed on the copper surface ($nCu^+ + nBTA^- \rightarrow -[Cu\text{-}BTA]_n\text{-}$). This precipitation film becomes an electrode surface coating, and thus inhibits corrosion of the metal, which is copper, of the pipe or the like in the entire hot water supply and heating system 100.

A manufacturer may control injection of the corrosion inhibitor in the maintenance, or an operator may control the corrosion inhibitor by manual addition thereof. Another example includes a method for adding the corrosion inhibitor on a predetermined periodic basis or upon detection of reduction in concentration by a system connected additionally or the like.

In this method, a liquid feeding pump and a liquid injection tank containing a solution having a predetermined concentration of the corrosion inhibitor are connected to the circulation line 12. This addition system properly manages the concentration of the corrosion inhibitor in the circulating liquid. This can result in reduction or elimination of a water leak due to corrosion of the hot water supply and heating pipe to improve lifetime and reliability of the system.

The anticorrosion performance degradation detection sensor 10 uses electrochemical impedance measurement in which an AC voltage from the power supply 4 is applied to the pair of electrodes 3 and a resistance component (impedance) is extracted from the obtained current response. A change in the state of the electrode surface coating associated with the inclusion of impurities in the circulating liquid is detected based on this electrochemical impedance measurement.

After detection of impurities by the change in the state of the electrode surface coating, a DC voltage from the power supply 4 is applied and released to the electrode surface coating to promote decomposition and reformation of the coating. The impurities are incorporated into the reforming coating and reach the electrode surface. This allows the anticorrosion performance degradation detection sensor 10 to detect whether the impurities is an actual corrosive factor for the electrode material, that is, the pipe.

As described above, the pair of electrodes 3 includes the detection electrode 1 and the counter electrode 2 that causes a current to flow to the detection electrode 1. The detection electrode 1 is made of a material same as the metal material used for the pipe of the circulation circuit for the circulating liquid (anticorrosion target) of the hot water supply and heating system 100. When the circulating liquid added to the corrosion inhibitor flows into the housing 6, the detection electrode 1 immersed in the circulating liquid is covered with the electrode surface coating having a surface thickness of about several tens of nanometers to several hundreds of nanometers.

The counter electrode 2 is an electrode for causing a current to flow through the circulating liquid to the detection electrode 1. The counter electrode 2 is disposed to face the detection electrode 1 with a predetermined distance. The counter electrode 2 is made of metal that exhibits high chemical stability and is resistant to corrosion even when a current flows therethrough. The counter electrode 2 is preferably made of an electrochemically noble metal (that is less likely to cause a chemical reaction on its own), for example gold, platinum, titanium, copper, stainless steel or the like.

The power supply 4 conducts application (including superimposition) and release of the AC voltage and the DC voltage to the pair of electrodes 3. The power supply 4 is connected to the pair of electrodes 3 through the lead 5. With regard to a value of an AC voltage applied for detection of the change in the electrode surface, a higher voltage leads to a higher current response sensitivity, but disadvantageously promotes an electrode reaction. The applied voltage preferably ranges from 10 mV to 50 mV inclusive to simultaneously achieve increased current response sensitivity and reduced progress of an electrode reaction.

The housing 6 accommodates the pair of electrodes 3 and a portion of the lead 5 as described above. The housing 6 may be preferably configured to prevent disturbance factors from being introduced therein, or to prevent an increase in the electrical conductivity due to dissolution of carbon dioxide from the atmosphere from occurring by maintaining an enclosed space.

For example, use of a noise filter, a noise canceller, an electromagnetic shield, a ground connection, or the like, is effective. This use allows the anticorrosion performance degradation detection sensor 10 to conduct a more accurate impedance measurement. The operation of the anticorrosion performance degradation detection sensor 10 is described in detail hereinafter.

As described above, the anticorrosion performance degradation detection sensor 10 applies an AC voltage to the detection electrode 1 and the counter electrode 2, and measures electrochemical impedance by extracting the resistance component from the current response. A change in the state of the electrode surface coating associated with the inclusion of impurities is detected based on the measurement result. After detection of the inclusion of the impurities, a DC voltage is then applied and released, thereby causing the electrode surface coating to decompose and reform.

A determination is then made as to whether impurities incorporated by reformation is a corrosive factor for the detection electrode 1, that is, a pipe material. When the impurities are determined to be a corrosive factor, facilitating removal of the corrosive factor included due to, for example, exchange of the circulating liquid allows corrosion of the pipe material to be inhibited.

The magnitude of the resistance component extracted from the current response varies in accordance with the frequency level of the frequency of the applied AC voltage. The high frequency range as used herein means herein a range above 1 kHz, and the low frequency range as used herein means a range below 1 Hz. The medium frequency range as used herein means herein a range between these two ranges, that is, a frequency range from 1 Hz to 1 kHz inclusive. As the resistance component extracted from the current response in the high frequency range, an electric resistance component (solution resistance) that does not involve electron transfer is detected.

As the frequency of the AC voltage applied is shifted toward the low frequency range, a charge transfer resistance, that is, a resistance component of the electrode reaction involving electron transfer, or a Warburg impedance, that is, a resistance component of chemical reaction dependent on diffusion of reactants that reach the electrode surface appears as a resistance component extracted from the current response.

The anticorrosion performance degradation detection sensor 10 of Embodiment 1 detects a change in the surface of the electrode surface coating and the detection electrode 1 as a change in resistance, thus applying a voltage with a predetermined frequency from the power supply 4 to the pair of electrodes 3.

As described above, the higher frequency of the AC voltage applied suppresses occurrence of the electrode reaction such as corrosion reaction or the like on the electrode surface, which can detect an electrical resistance of the electrode surface coating. However, the effect of solution resistance is required to be also considered at the same time. The optimal value for the frequency is therefore required to be set. Such a relationship between the frequency and the resistance change is described in detail below.

In Embodiment 1, the AC voltage from the power supply 4 considered as such is set to an AC voltage with a predetermined frequency. One of ordinary skill in the art will easily adjust the predetermined value of the AC voltage and the predetermined frequency with reference to the detailed description of the relationship between the frequency and the resistance change as described below. The extracted resistance value corresponds to the state of the electrode surface as the AC voltage is set to the predetermined applied frequency and the predetermined value of the applied voltage. Specifically, in a corrosion inhibition period, that is, a period in which the electrode surface coating for inhibiting corrosion of the detection electrode 1 is formed in a state where a corrosive factor is not included in the circulating liquid, the resistance value is simply high.

Conversely, in a stage where impurities that is a corrosive factor are included in the circulating liquid, the resistance value varies compared with the resistance value in the corrosion inhibition period because the state of the electrode surface coating having a greater resistance than the solution resistance changes. Frequency dependence of the detected impedance mentioned above is described first in order to describe a resistance change due to attachment of impurities to the electrode surface coating.

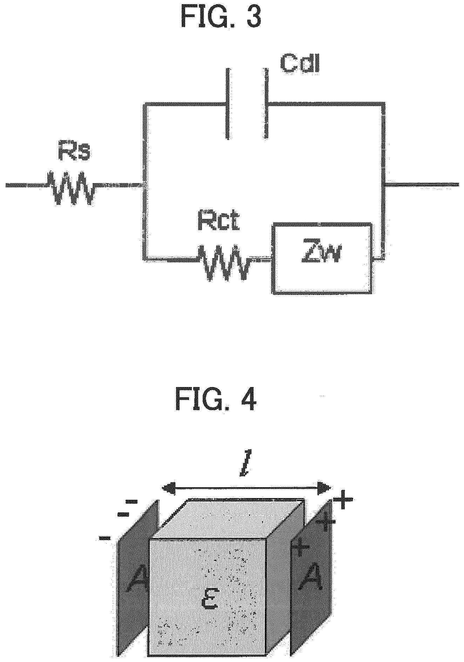

In electrochemical impedance measurement, an electrical equivalent circuit model having a simulated electrode interface is constructed to evaluate a surface state and electrode reaction of the electrode. FIG. 3 illustrates a typical electrical equivalent circuit with a simulated electrode reaction on an electrode surface. An impedance $Ztotal$ of the entire electrical equivalent circuit of FIG. 3 includes $C, Rs, Rct,$ and $Zw$, as described below.

C is a capacity for formation of an electric double layer, taking into account the influence of charges stored on the surface coating. $Rs$ is a solution resistance, taking into account the resistance of an electrolyte, the resistance of a copper electrode, and the resistance of the surface coating. $Rct$ is a charge transfer resistance and a resistance component associated with electron exchange in an electrode reaction. $Zw$ is Warburg impedance, and is a resistance component associated with mass transfer and diffusive transfer in the electrode reaction.

An AC voltage is applied to the electrical equivalent circuit illustrated in FIG. 3, and impedance is detected from a current response to the applied voltage. The following equation holds true for the detected impedance, depending on an applied angular frequency $\omega$.
Equation 1

$$Ztotal = Rs + \cfrac{1}{\cfrac{1}{Zc} + \cfrac{1}{Rct+Zw}} \cdots (1).$$

Equation 2

$$Zc = (j\omega C)^{-1} \cdots (2).$$

From Equations (1) and (2), the following equation is obtained.
Equation 3

$$Ztotal = Rs + \cfrac{1}{j\omega C + \cfrac{1}{Rct + Zw}} \cdots (3).$$

In Equation (3), $Ztotal$ approaches $Rs$ when the angular frequency $\omega$ increases, and $Rs + Rct + Zw$ when the angular frequency $\omega$ decreases. This means that information associated with the solution resistance is obtained in a high frequency range, information associated with the solution resistance, charge transfer resistance, Warburg impedance, and capacitive component for formation of the electric double layer are obtained in a medium frequency range, and information associated with the charge transfer resistance and Warburg impedance are obtained in a low frequency range.

Next, the resistance change due to attachment of impurities to an electrode surface coating is described. FIG. 4 illustrates a simplified model of a correlation between an electrode surface coating formed by the corrosion inhibitor and impedance. The simplified model as illustrated in FIG. 4 includes an electrode surface coating represented by a dielectric having a permittivity $\varepsilon$ and a thickness $l$, and an electrolyte having a value $\varepsilon$ of the greater permittivity than the electrode surface coating, for an electrode having an electrode area $A$.

The resistance change of the electrode surface coating in the impedance measurement can be represented by a capacitive component (capacitance). The following equation holds true for the capacitance of this system.
Equation 4

$$C = \frac{\varepsilon A}{l} \cdots (4).$$

In the electrode-electrode surface coating model as illustrated in FIG. 4, when impurities containing a corrosive factor are attached to the surface coating, the permittivity of the electrode surface changes due to the impurities having a permittivity different from the surface coating.

For example, when impurities are attached to the surface coating, the permittivity of the entire surface coating increases, which increases the capacitance $C$ of the system as seen from Equation (4). As C increases, $Zc$ and $Ztotal$ decrease in Equations (2) and (3) described above. In other words, when impurities containing a corrosive factor are attached to the surface coating, the detected impedance decreases.

In Embodiment 1, when attachment of impurities is detected, a determination is also made as to whether the impurities form a corrosive factor for an electrode material, that is, a pipe. The electrode surface coating is intentionally decomposed and reformed while incorporating the impurities into the reforming coating, thereby accelerating the attachment of impurities that is a corrosive factor to the electrode surface. Application and release of a DC voltage is effective as a way of facilitating decomposition and reformation of the electrode surface coating.

The application and release of the DC voltage leads to intended decomposition and reformation of an anticorrosive coating formed on the electrode surface, and the impurities can be incorporated into the reforming coating. Consequently, this enables inclusion of the corrosive factor in the circulating liquid to be detected early and accurately. It is basically sufficient to determine whether the impurities attached to the electrode surface actually corrode the electrode, but the detected impedance changes even when the impurities attached thereto is not a corrosive factor.

In addition, movement of the impurities through the anticorrosive coating to the electrode takes a considerable time as long as the anticorrosive coating is present on the electrode surface. Therefore, the intentional decomposition and reformation of the anticorrosive coating is effective as in Embodiment 1.

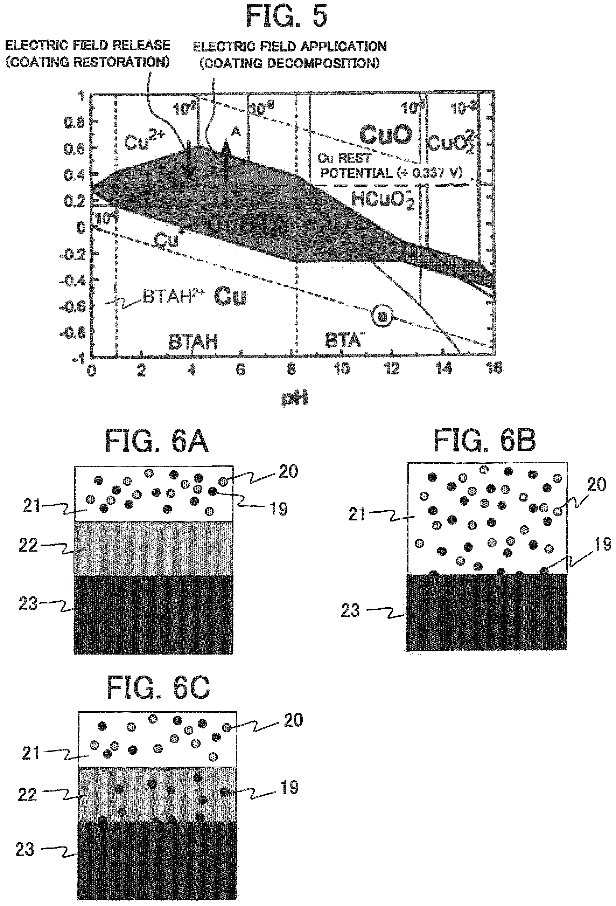

The decomposition and reformation of the anticorrosive coating is now described in detail. It is assumed here that the pipe (and the detection electrode 1) of the anticorrosion target is made of copper, and that benzotriazole is added in the circulating liquid as a corrosion inhibitor, as in the example described above. FIG. 5 illustrates a relation between pH of a solution and electric potential of a Cu-BTA complex of an anticorrosive coating according to Embodiment 1.

As can be seen in FIG. 5, as the rest potential of the copper electrode is 0.337 V (vs. normal hydrogen electrode (NHE)), a stable Cu-BTA complex is obtained at approximately pH = 0-9 for the liquid property. When a voltage is applied to the electrode with the stable Cu-BTA complex formed thereon toward oxidation, the Cu-BTA complex is separated to $Cu^{2+}$ or CuO and BTAH or $BTAH^{2+}$. That is, the oxidative decomposition thereof occurs.

The voltage value for causing the oxidative decomposition varies depending on the liquid property immersed, and can be determined based on the potential-pH diagram as illustrated in FIG. 5. When the circulating liquid has pH = 4.0, for example, the value of the voltage applied is set to additional 0.27 V or more to the rest potential (0.337 V vs. NHE) of Cu. This leads to a shift from a region of the Cu-BTA complex to a coexistence region of $Cu^{2+}$ and BTAH (arrow A), and the Cu-BTA coating undergoes the oxidative decomposition.

With the DC voltage applied, the decomposed Cu-BTA complex is stably present on the electrode surface as $Cu^{2+}$ and BTAH. When the DC voltage is released, the electrode potential returns to the rest potential (arrow B). $Cu^{2+}$ or CuO and BTAH or $BTAH^{2+}$ are then reduced to the Cu-BTA complex to reform a surface coating. When impurities that is a corrosive factor are included in the circulating liquid, in the coating reformation stage, $Cu^{2+}$ or CuO and BTAH or $BTAH^{2+}$ reforms the surface coating together while incorporating the impurities.

The reformation of the surface coating is described in more detail. FIGS. 6A to 6C illustrate how a coating is decomposed and how a coating is reformed when impurities are included, by application and release of an electric field according to Embodiment 1. As illustrated in FIG. 6A, a corrosion inhibitor 20 and impurities 19 are included in a circulating liquid 21 in a stage before application of an electric field. However, the impurities 19 are simply dispersed in the circulating liquid 21 because an anticorrosive coating 22 (Cu-BTA coating) is stably formed on a surface of a copper material 23 (corresponding to a surface of the detection electrode 1).

Next, as illustrated in FIG. 6B, in a stage of application of the electric field, the anticorrosive coating 22 (Cu-BTA coating) undergoes oxidative decomposition, and $Cu^{2+}$ or CuO and BTAH or $BTAH^{2+}$ are uniformly dispersed with the impurities 19 or the like. Then, as illustrated in FIG. 6C, upon release of the applied electric field, $Cu^{2+}$ or CuO and BTAH or $BTAH^{2+}$ reforms the anticorrosive coating 22 (Cu-BTA coating) while incorporating the impurities 19.

The impurities 19 thus remain dispersed in the coating. The impurities 19 incorporated as such are in contact with the surface of the copper material 23 (surface of the detection electrode 1). In a process of decomposition (destruction) of the anticorrosive coating 22 as illustrated in FIGS. 6A to 6C, the surface of the copper material 23 is not subject to damage.

When the impurities 19 is a corrosive factor (for example, iron rust of a piping system) and reach the surface of the detection electrode 1, the corrosion reaction proceeds on the surface of the detection electrode 1, and an AC impedance of the surface of the detection electrode 1 changes accordingly.

Therefore, the inclusion of the impurities is detected by the measurement of the AC impedance. This change in impedance influences the charge transfer resistance $Rct$ or the Warburg impedance $Zw$ in the above equation (1) or (3), and thus appears on the impedance response in the low frequency range. In particular, the charge transfer resistance $Rct$ dominated by the electron transfer involving the corrosion reaction of the electrode surface is largely influenced by the impedance change involving the corrosive factor that reaches the electrode surface, compared with the Warburg impedance dominated by a diffusion rate away from the electrode surface of the corrosive factor.

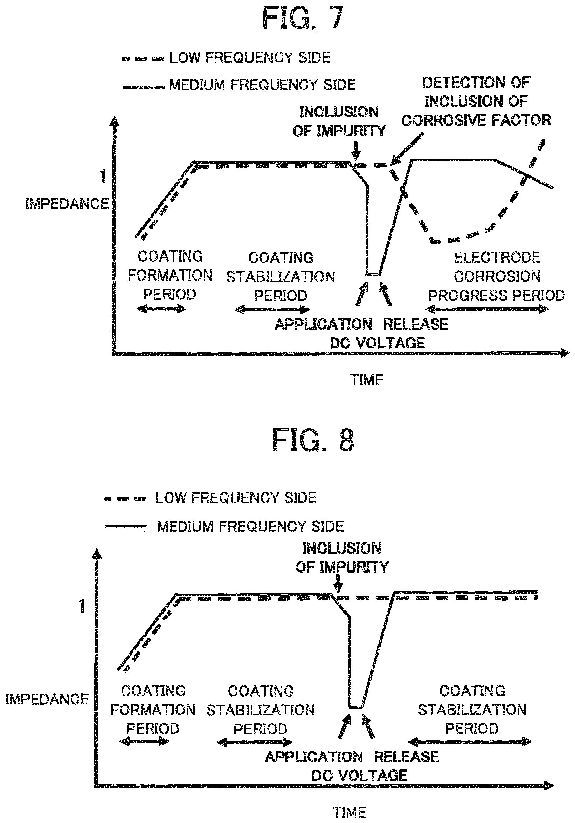

Detection of inclusion of the corrosive factor associated with the impedance change is described in detail hereinafter. FIG. 7 illustrates a change over time in an impedance response before and after decomposition and reformation of an electrode surface coating when impurities that is a corrosive factor are included in the circulating liquid.

In an example illustrated in FIG. 7, the pH of the circulating liquid is 7.0, and benzotriazole is added therein as a corrosion inhibitor. An AC voltage is superimposed with a voltage of 10 mV as a low frequency of 1 Hz and as a medium frequency of 100 Hz with respect to the pair of electrodes 3 (the detection electrode 1 is made of copper here). These impedance responses are monitored simultaneously.

Application and release of the DC voltage for decomposition and reformation of the electrode surface coating corresponds to an operation in which the potential of the pair of electrodes 3 is shifted toward the oxidation by 0.30 V and returns to the rest potential. FIG. 7 illustrates an impedance response, which has a value taken as 1 when the electrode surface coating is sufficiently formed.

As illustrated in FIG. 7, the resistance initially increases in a coating forming period that is a stage in which the corrosion inhibitor forms a surface coating on the electrode surface in the system. This increase occurs because the surface coating having high resistance is formed with the gradually increased thickness. In particular, the impedance value increases in the low frequency range to the medium frequency range.

The circulating liquid in which a predetermined concentration of the corrosion inhibitor is injected exhibits a constant resistance value of the respective low frequency range and the medium frequency range when formation of the surface coating is stable (coating stabilization period as illustrated in FIG. 7).

When impurities (here assumed to be iron rust) that is a corrosive factor having a predetermined permittivity are included in the circulation system, and attach to an electrode surface coating, the permittivity of the electrode surface increases. The permittivity of the entire electrode surface increases accordingly. As a result, the capacitance of the electrode increases and the impedance $Ztotal$ of the electrode decreases according to the equation (4) as described above.

This impedance change is a phenomenon observed in the medium frequency range that is affected by the electrode capacitance component. This impedance change is not observed in the low frequency range, and the impedance remains constant. This is because the electrode surface covered with the electrode surface coating prevents charge transfer due to the corrosion reaction on the electrode surface from occurring.

Accordingly, when the impedance value of the medium frequency range decreases from the value in the coating stabilization period, inclusion of the impurities is determined (inclusion of impurities illustrated in FIG. 7). The rate of decrease in the impedance value is preferably 5% or less, more preferably, 10% or less for precise detection, considering variations at the measurement.

After the inclusion of the impurities in the circulating liquid has been detected in this manner, a DC voltage is applied. As described above, the Cu-BTA complex is decomposed by applying a voltage in accordance with the liquid property toward oxidation. After decomposition, the electrode surface coating is removed, and only the detection electrode 1 remains.

The electrode impedance of the medium frequency range that represents a shape (mainly a thickness) of the electrode surface coating then significantly drops once (application of the DC voltage illustrated in FIG. 7). Then, the applied DC voltage is released to the detection electrode 1 with the surface coating decomposed and removed, which leads to the potential of the detection electrode 1 returning to the rest potential.

This operation allows the Cu-BTA complex to be reformed while incorporating the impurities that is a corrosive factor diffused in the circulating liquid. Specifically, as illustrated in FIGS. 6A to 6C, the electrode surface coating is reformed while incorporating iron rust that is a corrosive factor thereinto. As the electrode surface coating is reformed, the impedance value of the medium frequency range before application of the DC voltage increases again (release of the DC voltage as shown in FIG. 7).

As described above, some of iron rust incorporated in the reformation is in contact with the surface of the detection electrode 1 (see FIG. 6C). The iron rust in contact with the electrode surface thus causes the corrosion of the electrode surface to proceed (electrode corrosion progress period illustrated in FIG. 7). In this stage, a resistance component associated with electron exchange in a corrosion reaction of the pair of electrodes 3, that is, the charge transfer resistance $Rct$ decreases.

As $Rct$ decreases, the electrode impedance $Ztotal$ also decreases according to the equation (1) or (3) as described above. This decreased impedance appears more significantly in the low frequency range. Accordingly, when decreased impedance in the low frequency range is found, inclusion of impurities that is iron rust, that is, a corrosive factor is determined to be detected (detection of inclusion of a corrosive factor illustrated in FIG. 7).

The rate of decrease in the impedance value is preferably 5% or less, considering variations at the measurement. More preferably, when the impedance value is 10% or less, precise detection is possible. The impedance also changes in the medium frequency range because the permittivity of the electrode surface coating varies in accordance with incorporation of the corrosive factor.

Inclusion of impurities that is not a corrosive factor in a circulating liquid is described in detail hereinafter. FIG. 8 illustrates a change over time in an impedance response before and after decomposition and reformation of an electrode surface coating when impurities that is not a corrosive factor are included in the circulating liquid. The specific conditions are the same as in FIG. 7, but the circulating liquid here additionally includes granular glass, which is not a corrosive factor, in other words, which does not influence corrosion of an electrode.

The description with reference to FIG. 7 can be applied to the process of detecting inclusion of the granular glass in the circulating liquid based on the impedance change (inclusion of impurities illustrated in FIG. 8) and the process of reforming the electrode surface coating while incorporating the impurities by application and release of a DC voltage (application or release of a DC voltage illustrated in FIG. 8).

As illustrated in FIG. 8, the electrode impedance response in the low frequency range does not change before application and after release of the DC voltage because the granular glass, which is an impurity, does not influence the corrosion of the electrode. Hence, the inclusion of impurities is not recognized as inclusion of a corrosive factor in the circulating liquid (coating stabilization period illustrated in FIG. 8).

In the foregoing, the impedance response to an operation of application and release of a DC voltage to promote decomposition and reformation of the electrode coating has been described. The impedance response of the pair of electrodes 3 without application and release of the DC voltage is also described hereinafter.

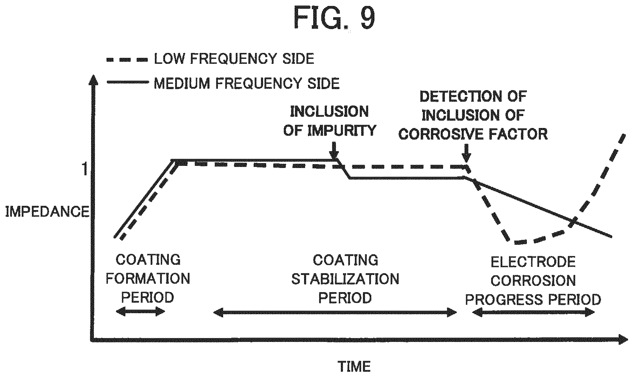

FIG. 9 illustrates a change over time in an impedance response without an operation of application and release of a DC voltage when impurities that is a corrosive factor are included in the circulating liquid. The measurement conditions or the like are the same as those described with reference to FIGS. 7 and 8, but the circulating liquid here additionally includes iron rust, which is an impurity and also a corrosive factor.

The description with reference to FIGS. 7 and 8 can be applied to the process of detecting inclusion of the iron rust in the circulating liquid based on the impedance change (inclusion of impurities illustrated in FIG. 9). However, observation of change in the impedance response subsequent to the process, as illustrated in FIG. 9, shows that the electrode impedance response of the medium frequency range changes due to attachment of iron rust to the electrode surface coating, but the electrode impedance response of the low frequency range has an extremely long period with unchanged resistance after attachment of iron rust and a decrease in the impedance response takes an extended period of time (period from inclusion of impurities to detection of inclusion of a corrosive factor illustrated in FIG. 9), as compared with FIG. 7.

As described above, the Cu-BTA complex does not remain unchanged to exist stably even after the formation thereof, but the equilibrium reaction of decomposition and formation of the Cu-BTA complex proceeds and is always repeated, thereby allowing the Cu-BTA complex to exist stably.

Accordingly, in FIG. 9, the transfer rate of iron rust, which is a corrosive factor, to reach the electrode surface after the attachment to the electrode surface coating is expected to be dominated by the decomposition and formation reaction rate of the Cu-BTA complex in the circulation system. As illustrated in FIGS. 7 and 9, the transfer rate of the corrosive factor in accordance with the reaction is, however, determined to be significantly lower than the transfer rate in the operation to apply and release the DC voltage.

The time between attachment of impurities, which is a corrosive factor, to the electrode surface coating and transfer thereof to the electrode surface is defined as *Tm,* and the value *Tm* was also examined. Initially, an anticorrosive coating was formed on the electrode surface, and a circulating liquid that did not include a corrosion inhibitor and iron rust was then circulated.

Then, iron rust was added to the circulation system and the time was set to *T* = 0. The Cu electrode potential was also measured at *T* = 0. When iron rust reaches the Cu electrode, the iron rust increases the potential thereof. Hence, the change in the Cu electrode potential over time was measured after *T* = 0. As a result, the increase in the potential due to attachment of iron rust to the Cu electrode was confirmed after 2000 hours (approximately 80 days).

An operation of application and release of the DC voltage enables this increase in the potential to occur over a few seconds. Furthermore, in the above example, *Tm* was examined in the circulation system in which the anticorrosive coating was formed, but a corrosion inhibitor was not included in the circulating liquid. This implies that *Tm* is expected to be longer than 2000 hours in the circulation system containing the corrosion inhibitor practically usable.

In Embodiment 1, intentional decomposition and reformation of an anticorrosive coating by application and release of a DC voltage allows inclusion of a corrosive factor in a circulation system to be detected early and accurately based on a change in the impedance response in the application of an AC voltage in a medium frequency range and a low frequency range before and after the DC voltage operation.

Furthermore, FIGS. 7 to 9 reveal that the change in the impedance response in the application of the AC voltage in either of the medium frequency range or the low frequency range also allows inclusion of a corrosive factor in the circulation system to be detected early and accurately.

As can been seen from FIGS. 7 and 8, for example, unless impurities that is a corrosive factor are included, no change occurs in the impedance response in the application of the AC voltage in the medium frequency range and the low frequency range before and after the operation of application and release of the DC voltage.

When impurities that is a corrosive factor are included, a change occurs earlier in the impedance response in the application of the AC voltage in the low frequency range than in the medium frequency range. However, considering FIG. 9, the operation of application and release of the DC voltage causes the change in the impedance response due to inclusion of a corrosive factor to occur earlier in the medium frequency range in the application of the AC voltage than normal.

The anticorrosion performance degradation detection sensor 10 can detect inclusion of impurities in the circulating liquid and determine whether the impurities is a corrosive factor by measuring and monitoring an impedance response in application of an AC voltage in either of the medium frequency range or the low frequency range, or by measuring and monitoring an impedance response in application of an AC voltage in both of the medium frequency range and the low frequency range.

Any method may be employed as a technique of measuring and monitoring both of the impedance responses simultaneously in the application of the AC voltages in both of the medium frequency range and the low frequency range. For example, the AC voltages in both of the medium frequency range and the low frequency range are superimposed and applied from the power supply, and the respective currents are separated by a filter, thereby allowing both of the impedance responses to be measured simultaneously.

Alternatively, the impedance responses can be detected and determined by measuring and monitoring each of the impedance responses while switching application of the AC voltage between the medium frequency range and the low frequency range. The voltage application, frequency switching, and the measurement and monitoring of the impedance responses can be conducted by the power supply 4 as illustrated in FIG. 2, the controller 16 as illustrated in FIG. 1, and the like, for example, any of which may have a corresponding feature thereto.

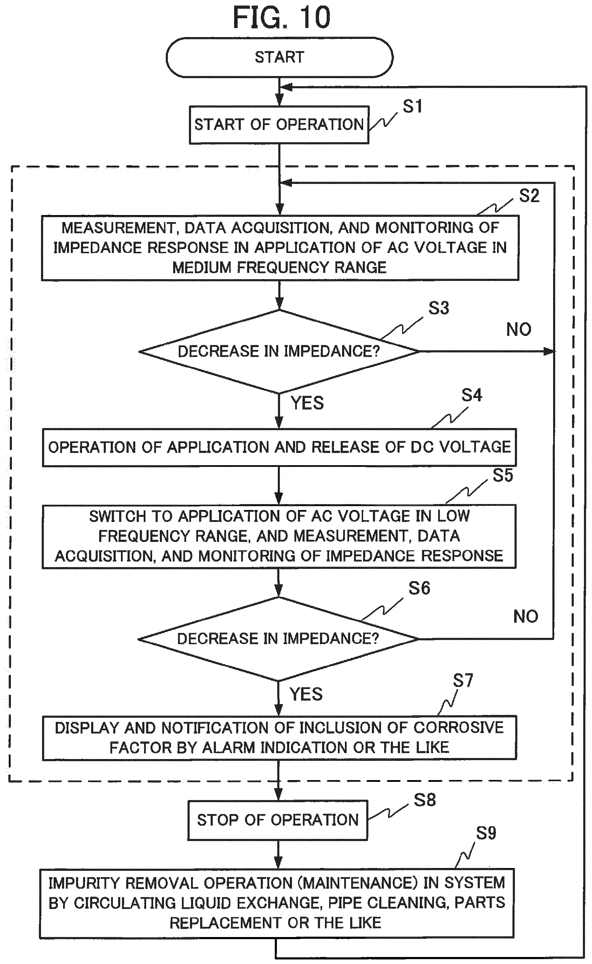

FIG. 10 is an example of a flowchart when the inclusion of the corrosive factor is detected while switching between a medium frequency range and a low frequency range according to Embodiment 1. The following description is organized into the "apparatus side operation" conducted by the anticorrosion performance degradation detection sensor 10 and the controller 16 when inclusion of an impurity is detected, and the "manual operation" that is a start and stop of the hot water supply and heating system 100 or the like in the entire system, or parts exchange, cleaning, and the like of the pipe.

The flowchart in FIG. 10 indicates the "apparatus side operation" in a broken lined area and the "manual operation" outside the broken lined area. A system operation initially starts (step S1), and measurement, data acquisition, and monitoring of an impedance response in application of an AC voltage in the medium frequency range is conducted in the anticorrosion performance degradation detection sensor 10 (step S2).

When the impedance in the medium frequency range decreases (step S3; YES), an operation of application and release of a DC voltage is conducted (step S4) because the controller 16 determines inclusion of some impurities. This decrease can be detected, as described above, if the rate of decrease is 5% or more. The rate of decrease is, more preferably, 10% or more for more precise detection.

Hence, these values may be used as a threshold. Conversely, when the impedance in the medium frequency range does not decrease (not change) (step S3; NO), measurement and monitoring of the impedance response in application of the AC voltage in the medium frequency range is conducted as in a normal operation.

After the operation of application and release of the DC voltage is conducted (step S4), switching to application of the AC voltage in the low frequency range is performed, and measurement, data acquisition, and monitoring of the impedance response is conducted (step S5). When the impedance in the low frequency range decreases (step S6; YES), the controller 16 detects and determines that the included impurities is a corrosive factor, thus signaling the information externally.

This decrease can also be detected, as described above, if the rate of decrease is 5% or more. The rate of decrease is, more preferably, 10% or more for more precise detection. Hence, these values may be used as a threshold. Examples of the signaling method can be an alarm sound, an alarm lamp, alert indications, or other signaling method that enables inclusion of a corrosive factor for the system to be recognized (step S7).

The system operation is shut down for maintenance in the system (step S8). Then, the impurities that is a corrosive factor are removed from the system as appropriate by exchange of the circulating liquid, cleaning of piping including electrodes, exchange of parts, or the like as maintenance means in the system (step S9).

After completion of the maintenance, the operation starts again (step S1), and measurement, data acquisition, and monitoring of the impedance response in application of the AC voltage in the medium frequency range is conducted (step S2) as described above. When the impedance in the low frequency range does not decrease (not change) (step S6; NO), the impurities are determined not to be a corrosive factor. Hence, switching is performed to measure and monitor the impedance response in application of the AC voltage in the medium frequency range (step S2).

Embodiment 2

In Embodiment 1, inclusion of an impurity is detected by measurement and monitoring of the impedance response, although it is unknown whether the impurity is a corrosive factor, and then the operation of application and release of the DC voltage is conducted by the power supply 4. The operation of application and release of the DC voltage can be conducted regularly on a predetermined periodic basis. This approach is described in Embodiment 2.

As described above, the time between attachment of impurities, which is a corrosive factor, to an electrode surface coating and transfer thereof to the electrode surface is dominated by a reaction rate of the equilibrium reaction of decomposition and formation of a Cu-BTA complex. The reaction rate is slow, which consequently requires a longer time for the transfer.

Accordingly, when a period of the operation of application and release of the DC voltage by the power supply 4 takes longer time than the time for the transfer, the corrosive factor reaches the electrode surface, and cannot be detected even though the corrosion of the electrode proceeds. That is, the period of the operation of application and release of the DC voltage is required to be set to be shorter than the time for transfer.

For example, the time between attachment of impurities, which is a corrosive factor, to the electrode surface coating and transfer thereof to the electrode surface is defined as *Tm* (see Embodiment 1 as described above). The period of the operation of application and release of the DC voltage by the power supply 4 was set to be longer than *Tm,* and the anticorrosion performance degradation detection sensor 10 was operated in the hot water supply and heating system 100 illustrated in FIG. 1.

The result showed that the anticorrosion performance degradation detection sensor 10 failed to detect inclusion of the corrosive factor although the pipe material of the hot water supply and heating system 100 was corroded (unillustrated). On the other hand, when the period of application of the DC voltage from the power supply 4 was set to be equal to or shorter than *Tm,* this setting was confirmed to provide detection of the inclusion of the corrosive factor (unillustrated).

The operation of application and release of the DC voltage from the power supply 4, which promotes decomposition and reformation of the electrode surface coating, can be conducted regularly on a predetermined periodic basis. The predetermined period is preferably equal to or shorter than the time (*Tm*) between attachment of the corrosive factor to the electrode surface coating and transfer thereof to the electrode surface.

Embodiment 3

Embodiment 3 describes changing an AC voltage application scheme instead of applying and releasing a DC voltage to promote decomposition and reformation of the electrode surface coating on a surface of a detection electrode 1. In Embodiment 3, the AC voltage is applied with a predetermined voltage value, a predetermined frequency, and a predetermined periodicity to promote decomposition and reformation of the electrode surface coating. Embodiment 3 can avoid the need for adapting two types of AC and DC voltages to a power supply 4, which applies voltage to the detection electrode 1, thus enabling the simplified construction.

The typical AC voltage for detection of inclusion of an impurity may be a small voltage. The AC voltage is, for example, preferably 10 to 50 mV. On the other hand, the AC voltage used for causing the electrode surface coating to decompose and reform preferably has a predetermined value of voltage, which is applied from a rest potential of the detection electrode 1 toward oxidation.

More preferably, the effective value of the lower limit in the oxidation direction is 0.27 V or more. The upper limit can be freely set so long as the limit is equal to or larger than the lower limit to allow the coating to be decomposed. However, because the higher voltage value accelerates the decomposition (elution) of a copper material, the upper value may be preferably 1.0 V.

The lower frequency is more preferable as the predetermined applied frequency of the AC voltage because a time is required for $Cu^{2+}$ or CuO and BTAH or $BTAH^{2+}$, which are decomposed by voltage application, to be formed while incorporating corrosive factors (here assumed to be iron rust) in a circulating liquid. The period of the AC voltage is, more preferably, 1 sec or more. That is, the upper limit may be set to be 1 Hz or less.

As regards the lower limit, the lower frequency takes longer time to incorporate a corrosive factor and can thus incorporate more corrosive factor thereinto, but also delays the detection time. Thus, the lower limit is, preferably, 0.01 Hz or more. Similarly, as the increased predetermined applied periodicity of the AC voltage delays the detection time, thus a one-cycle application is enough for completion at the earliest possible time.

As an example of the AC voltage to promote decomposition and reformation of such an electrode surface coating, application of voltage followed by release thereof from the power supply 4 was conducted under conditions of the predetermined voltage value of 0.30 V, the predetermined applied frequency of 0.1 Hz, and the predetermined applied periodicity of 1 cycle.

As a result, it was confirmed that the coating was reformed while incorporating the corrosive factor (iron rust), similarly to the application of the DC voltage, and the incorporated iron rust can be detected by the detection electrode 1 in the anticorrosion performance degradation detection sensor 10 (unillustrated).

Embodiment 4

Embodiment 4 describes an arrangement of an anticorrosion performance degradation detection sensor 10 (detection electrode 1) in a location susceptible to corrosion within a pipe system of a hot water supply and heating system 100. This enables inclusion of a corrosive factor for a pipe material in a circulating liquid to be detected early and accurately.

In the pipe material near the location where the flow rate of the circulating liquid is high, for example, local corrosion proceeds automatically due to the flow of the circulating liquid. In the pipe material near the location where the flow rate of the circulating liquid is low, corrosion also proceeds due to formation of an oxygen concentration cell which results from dwelling of the circulating liquid and unbalancing in dissolved oxygen distribution.

The detection electrodes 1 each were placed, as a simulation electrode of the pipe material, in the location where the flow rate of the circulating liquid is the highest and the location where the flow rate thereof is lowest, and the function of the anticorrosion performance degradation detection sensor 10 was verified. The results showed that attachment of the corrosive factor (for example, iron rust) could be detected earlier in both of the locations than the any other location of the pipe material in the circulation system.

In particular, the detection electrode 1 placed in the high flow rate location suffers from delayed reformation of the electrode surface coating, which influences the electrode impedance response not only in the low frequency range but also in the medium frequency range. For example, it is confirmed that the electrode impedance in the medium frequency range, which is reduced by application of the DC voltage, does not return to the original value even by release of the voltage and continues to fall, which exhibits the corrosive reaction in progress.

Embodiment 5

The anticorrosion performance degradation detection sensor 10 according to Embodiment 5 is described in which a portion of an existing pipe, for example a circulation line 12, bypass lines 13 and 14, or the like, is used and made to function as a counter electrode 2 of a pair of electrodes 3.

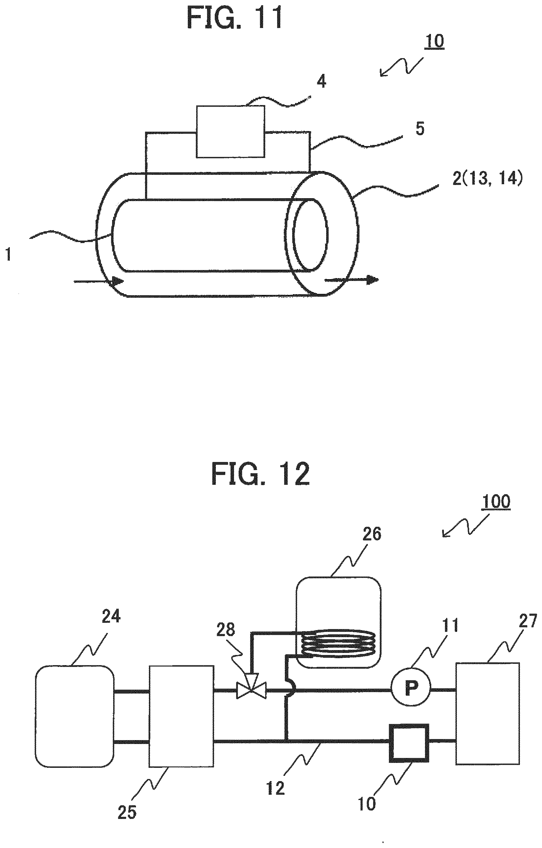

FIG. 11 illustrates a configuration of an anticorrosion performance degradation detection sensor according to Embodiment 5. As illustrated in FIG. 11, a detection electrode 1 is a cylindrical electrode bar so as to be equidistant from the bypass lines 13 and 14 formed of a circular pipe that serves as the counter electrode 2. The inter-electrode distance is set to, for example, 95% of the equivalent diameter of the electrode bar that serves as the detection electrode 1.

Since a portion of the existing pipe is used as the counter electrode 2, the circulating liquid flows (indicated by an arrow illustrated in FIG. 11) between the detection electrode 1 and the counter electrode 2 (bypass lines 13 and 14). The detection electrode 1 and a lead 5 connected to the detection electrode 1 side is electrically isolated from the bypass lines 13 and 14 that serves as the counter electrode 2 and is designed to avoid a short circuit.

The change over time in the impedance response of the surface of the detection electrode 1 due to degradation of the anticorrosion performance of the circulating liquid was measured using the anticorrosion performance degradation detection sensor 10.

As a result, the comparable results were obtained to the change over time in the impedance response obtained in the above described Embodiment 1 (unillustrated). Accordingly, such an arrangement of the portion of the existing pipe used as the counter electrode 2 allows inclusion of the corrosive factor to be detected early and accurately.

Embodiment 6

In Embodiment 6, an anticorrosion performance degradation detection sensor 10 in a hot water supply and heating system 100, which includes a thermocouple 18 illustrated in FIG. 2, is described in detail.

The hot water supply and heating system 100 is generally operated under control of a constant temperature, but a change in temperature during operation is contemplated under some circumstances. The impedance response in a circulating liquid and a detection electrode 1 measured in the anticorrosion performance degradation detection sensor 10 has temperature dependence.

Accordingly, whether the impedance response of interest is due to the liquid property of the circulating liquid and the electrode surface coating or due to the change in temperature is required to be known, which would otherwise provide a concern of malfunction of the anticorrosion performance degradation detection sensor 10. An effective approach to solve this problem is to install a function of compensating temperature for impedance in accordance with a change in temperature of the circulating liquid when the temperature thereof is checked.

The impedance of the circulating liquid and the surface of the detection electrode 1 measured by the anticorrosion performance degradation detection sensor 10 increases by 2% when the temperature of the circulating liquid decreases by 1 °C. As illustrated in FIG. 2, a thermocouple 18 for measuring temperature of the circulating liquid flowing through the circulation line 12 is disposed near the detection electrode 1, and a change in the temperature is constantly monitored by a controller 16 that, for example, employs a data logger (numerical observation) function.

In this arrangement, when the temperature of the circulating liquid decreases by $t$ °C from the initial detected value, the impedance response is corrected to increase by $0.02t$ to the initial impedance response detected in the respective medium and low frequency ranges. The change in the temperature-compensated impedance response is monitored and determined, for example, by the controller 16. This can remove an effect of a change in the temperature in detecting degradation of the anticorrosion performance.

The temperature compensation function can also apply to a high temperature operation in the design changes of the hot water supply and heating system 100. As with the temperature decrease as described above, when the temperature of the circulating liquid increases by $t$ °C from the initial detected value, the impedance response is corrected to decrease by $0.02t$ to the initial impedance response detected in the respective medium and low frequency ranges. The change in the temperature-compensated impedance response is monitored and determined, for example, by the controller 16.

The hot water supply and heating system 100 that employs the anticorrosion performance degradation detection sensor 10 having such a temperature compensation function can address changes of the temperature settings during operation. Furthermore, accurate and early detection of impurities can be achieved even when a system failure or the like prevents temperature control.

EXAMPLES

Example 1

In FIGS. 1 and 2, when a water quality (environment) of a circulating liquid flowing in a housing 6 does not correspond to a water quality of the circulating liquid circulating in a hot water supply and heating system 100, the detection of a corrosive factor by a detection electrode 1 does not also correspond to corrosion of the circulation line 12 of the hot water supply and heating system 100.

Referring to FIG. 1, for example, an anticorrosion performance degradation detection sensor 10 is bypassed from the circulation line 12 and connected to a circulation system. Here, an interruption of a flow by impurities or the like entering an inlet of a bypass may cause the circulating liquid to dwell in the anticorrosion performance degradation detection sensor 10.

Specifically, a corrosion inhibitor is consumed in the circulation line 12, while the corrosion inhibitor is not consumed because the circulating liquid may dwell in the anticorrosion performance degradation detection sensor 10. This means that the anticorrosion performance degradation detection sensor 10 does not work even though the anticorrosion performance decreases in the circulation system. As a result, an objective to properly control a timing of addition of the corrosion inhibitor to inhibit corrosion in the circulation line 12 of the hot water supply and heating system 100 may be unachievable.

Example 1 describes the hot water supply and heating system 100 in which the environment to which the detection electrode 1 is exposed therein is adjusted to be the same as the environment to which anticorrosion targets of the hot water supply and heating system 100 are exposed.

Examples of factors that influence corrosion of the detection electrode 1 and the anticorrosion targets of the hot water supply and heating system 100 include temperature and flow rate of the circulating liquid, a dissolved oxygen concentration, a corrosive factor (here assumed to be iron rust), a concentration of a corrosion inhibitor (here assumed to be benzotriazole), and the like.

The temperature and flow rate of the circulating liquid in the housing 6 are set to be the same as in the environment to which the anticorrosion targets are exposed, by adjusting a heat retaining system, a pump flow, and dimensioning. Furthermore, the dissolved oxygen concentration (solubility) that depends on the temperature and flow rate of the circulating liquid is similarly set to be the same as in the environment to which the anticorrosion targets are exposed by adjusting the temperature and flow rate of the circulating liquid.

When the hot water supply and heating system 100 is operated at 60 °C, for example, the temperature of the circulating liquid is 60 °C. Hence, a heater, a temperature controller, and a heat insulator may be attached to ensure that the temperature in the housing 6 in the branch does not drop below 60 °C.

In this configuration, the concentrations of the iron rust and the corrosion inhibitor were measured both in the environment to which the detection electrode 1 is exposed and the environment in the circulation line of the hot water supply and heating system 100. For examination of the water quality of the circulating liquid flowing in the housing 6 of the anticorrosion performance degradation detection sensor 10, sampling of the circulating liquid was conducted during operation of the hot water supply and heating system 100. The concentration of iron rust was measured by inductively coupled plasma (ICP) analysis.

The concentration of the corrosion inhibitor contained in the circulating liquid was measured by ultraviolet absorption spectral analysis. The analysis results for the samples of the circulating liquid showed that the concentrations of iron rust and the corrosion inhibitor were the same both in the sample collected from the anticorrosion performance degradation detection sensor 10 and in the circulating liquid flowing through the anticorrosion targets.

For the entire hot water supply and heating system 100, the bypass lines 13 and 14 connected to the anticorrosion performance degradation detection sensor 10, a circulation pump 11, and the housing 6 were sized so that the temperature and the flow rate of the circulating liquid flowing in the vicinity of the detection electrode 1 are the same as those of the circulating liquid flowing through the anticorrosion targets.

This allows the environment to which the detection electrode 1 is exposed to be the same as in the environment in the circulation line 12 of the hot water supply and heating system 100. The hot water supply and heating system 100 of the present invention thus enables the detection electrode 1 of the anticorrosion performance degradation detection sensor 10 to function as a simulation electrode.

Example 2

Example 2 describes examination of how liquid properties of a circulating liquid and voltage values of a DC voltage for an operation of application and release influence an impedance response of a detection electrode 1.

As illustrated in FIG. 5, a Cu-BTA complex formed on an electrode surface changes the state in accordance with the liquid property of a solvent in contact with the electrode surface, at a level of the rest potential of copper that is a material of the detection electrode 1.

The value of the DC voltage to cause the Cu-BTA complex formed on the electrode surface to decompose and reform in accordance with the liquid property of the circulating liquid is examined. Solution A (pH = 4), solution B (pH = 7), and solution C (pH = 13) were prepared as a circulating liquid.

The DC voltage was applied and released to cause a Cu-BTA complex formed on the surface of the detection electrode 1 in each of anticorrosion performance degradation detection sensors 10 including the circulating liquid of the respective solutions, and the effects of the voltage values on the impedance response of the detection electrode 1 were examined.

The results showed that for solutions A and B, inclusion of a corrosive factor in the circulating liquid could be detected by application and release of the DC voltage of 0.30 V. Attachment of the corrosive factor to the electrode surface appeared to be able to detected in these liquid properties because $Cu^{2+}$ or $CuO$ and BTAH or $BTAH^{2+}$, which were decomposed, were formed while incorporating corrosive factors (here assumed to be iron rust) in the circulating liquid.

For solution C, however, the DC voltage for application and release operation was applied to the electrode in a range of 0.0 V to 1.0 V in 0.1 V steps, but inclusion of a corrosive factor in the circulating liquid could not be detected. This can be attributed to the inability of the Cu-BTA complex to stably exist in a range larger than pH = 11.5 and beginning at the rest potential of the copper electrode toward oxidation, in which $CuO$ and $BTA^-$ exists instead of the complex.

Thus, it has been found that the liquid property of the circulating liquid used in the hot water supply and heating system 100 is required to be controlled. Specifically, the liquid property is required to be controlled to be pH = 10 or less, for example by a device or the like.

Example 3

Example 3 describes effects of an anticorrosion performance degradation detection sensor 10 when a hot water supply and heating system 100 was actually operated.

FIG. 12 schematically illustrates a hot water supply and heating system provided with the anticorrosion performance degradation detection sensor according to Example 3. FIG. 1 represents, as a system component, the cooling target 15 integrally with a heat exchange member, while FIG. 12 illustrates a component member of the cooling target 15 illustrated in FIG. 1, which was used in Example 3.

As illustrated in FIG. 12, the hot water supply and heating system 100 includes the anticorrosion performance degradation detection sensor 10, a circulation pump 11, a circulation line 12, an outdoor unit 24 that is a heat source through a refrigerant from the outdoor, a heat exchanger 25 for exchanging heat between the refrigerant supplied from the outdoor unit 24 and a circulating liquid at the circulation line 12 side, a hot water supply tank 26 for storing the circulating liquid heated by the heat exchanger 25 and supplying the heated circulating liquid as hot water, a radiator 27 for radiating heat indoors by the heated circulating liquid, and a switching valve 28 for controlling supply of the circulating liquid to the hot water supply tank 26 and the radiator 27.

The anticorrosion performance degradation detection sensor 10 can be disposed at any location in the circulation line 12. The anticorrosion performance degradation detection sensor 10 of Example 3 is disposed downstream of the radiator 27 where iron rust or the like, which is a corrosive factor for a pipe, is prone to occur, thereby allowing inclusion of the iron rust that is a corrosive factor to be detected earlier.

In the hot water supply and heating system 100 illustrated in FIG. 12, initially, the outdoor unit 24, which is a heat source, starts operating upon the hot water supply tank 26 being filled with tap water that is supplied thereto. The heat exchanger 25 then heats the circulating liquid at the circulation line 12 side using the heated refrigerant from the outdoor unit 24, and the heated circulating liquid is circulated through the circulation line 12 by the circulation pump 11. The anticorrosion performance degradation detection sensor 10 is activated upon circulation of the circulating liquid through the circulation line 12 after the circulation pump 11 operates.

Upon activation of the anticorrosion performance degradation detection sensor 10, an electrode impedance of a detection electrode 1 is measured and the initial value is defined as a reference value. Inclusion of impurities in the circulation line 12 is then evaluated based on a comparison between a change over time in the electrode impedance and the reference value.

A regular electrode impedance measurement was introduced so that application and release of an electric field to promote decomposition and reformation of an anticorrosive coating can be conducted upon attachment of impurities to the surface of the detection electrode 1, and that inclusion of a corrosive factor can be detected more accurately.

The measurement period was set to 1000 hours in Example 3. The other conditions of the anticorrosion performance degradation detection sensor 10 including a voltage value of an electric field applied for the coating decomposition, an AC voltage value in the impedance measurement, applied frequency, and the like were the same as those described in Embodiment 1.

As a result of the continuous operation of such a hot water supply and heating system 100, a change over time in the electrode impedance in a medium frequency range of the detection electrode 1 was measured, in an early stage, as illustrated in FIG. 8, by attachment of impurities that is not a corrosive factor. The impedance change in a low frequency range as illustrated in FIG. 7 could be detected after approximately 10000 hours (14 months) as regards inclusion of iron rust that could be originated from the component material of the radiator 27.

Replacement of the detection electrode 1, addition of an anticorrosive, and cleaning and removal of iron rust formed on the surface of the radiator 27 are conducted based on the detection, which can inhibit corrosion due to attachment of the iron rust to a pipe of the hot water supply and heating system 100. This can eventually improve lifetime of the system.

The disclosure in the embodiments and examples as described above may be combined as appropriate and practiced. The present invention can apply to other facility apparatuses through which a solvent such as cooling water or the like circulates. The present invention may, for example, apply to facility apparatuses such as an air-conditioning system or the like including a refrigeration cycle formed by connecting a compressor, a condenser, expansion means, an evaporator, and the like through a pipe to circulated a refrigerant therethrough.

The specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

Industrial Applicability

The present invention can provide earlier, more accurate, and more sensitive detection of whether an impurity included (or being included) in a solvent to which a corrosion inhibitor is added is actually a corrosive factor for an electrode material, or a pipe.

List of Reference Signs

1    Detection electrode
2    Counter electrode
3    Pair of electrodes
4    Power supply
5    Lead
6    Housing
10   Anticorrosion performance degradation detection sensor
11   Circulation pump
12   Circulation line
13   Bypass line
14   Bypass line
15   Cooling target
16   Controller
17   Data transmission cable
18   Thermocouple
19   Impurity
20   Corrosion inhibitor
21   Circulating liquid
22   Anticorrosive coating
23   Copper material
24   Outdoor unit
25   Heat exchanger
26   Hot water supply tank
27   Radiator
28   Switching valve
100  Hot water supply and heating system

**Claims**

1.  An anticorrosion performance degradation detection device for detecting inclusion of a corrosive factor in a solvent (21) to which a corrosion inhibitor for inhibiting corrosion of an anticorrosion target material is added, the anticorrosion performance degradation detection device **characterized by** comprising:

- a detection electrode (1) that is adapted to react with the corrosion inhibitor dissolved in the solvent (21) to form on a surface thereof an electrode surface coating that inhibits corrosion;
- a counter electrode (2) disposed to face the detection electrode (1) with a predetermined distance therebetween;
- a power supply (4) that is adapted to apply an AC voltage and a DC voltage between the detection electrode (1) and the counter electrode (2); and
- a sensor (16) that is adapted to measure impedance of the detection electrode (1) in at least a low frequency range and a medium frequency range among the low frequency range, the medium frequency range, and a high frequency range,
wherein the power supply (4) is adapted to apply the DC voltage when the impedance in the medium frequency range decreases from a first predetermined value, and to release the applied DC voltage when the impedance in the medium frequency range decreases from a second predetermined value,
wherein the sensor (16) is adapted to measure whether the impedance of the detection electrode (1) in the low frequency range decreases from a third predetermined value after the release of the applied DC voltage,
wherein the medium frequency range is between 1 Hz and 1 kHz, wherein the low frequency range is less than 1 Hz, and
wherein the high frequency range is more than 1 kHz.

2.  The detection device according to claim 1, **characterized by** further comprising notification means (16) for notifying information indicating inclusion of the corrosive factor when the impedance of the detection electrode (1) in the low frequency range decreases from the third predetermined value.

3.  The detection device according to claim 2, **characterized in that** the DC voltage applied by the power supply (4) is 0.27 V or more with respect to a rest potential of the detection electrode (1).

4.  The detection device according to claim 2 or 3, **characterized in that** the power supply (4) is adapted to repeat the application and release of the DC voltage periodically.

5.  The detection device-according to any one of claims

**characterized by** further comprising a device that is adapted to control a liquid property of the solvent (21) to have a pH value of pH = 10 or less.

6. The detection device according to claim 1, **characterized in that** the power supply (4) is adapted to apply, for one second or more, an AC voltage having a frequency in a range of 0.01 Hz to 1 Hz instead of applying the DC voltage.

7. The detection device according to claim 6, **characterized in that** the AC voltage applied instead of the DC is 0.27 V or more with respect to a rest potential of the detection electrode (1).

8. A hot water supply and heating system (100) **characterized by** comprising:

the anticorrosion performance degradation detection device-according to any one of claims 1 to 7;
a circulation pump (11) that is adapted to circulate the solvent (21); and
a circulation line (12) that is adapted to connect the circulation pump (11) and a cooling target (15), the solvent (21) circulating through the circulation line (12),
wherein a part of the circulation line (12) is connected to the anticorrosion performance degradation detection device as a bypass line (13, 14).

9. The system (100) according to claim 8, **characterized in that** the counter electrode (2) is a portion of a pipe of the bypass line (13, 14), and the detection electrode (1) is disposed at a center of the pipe of the bypass line (13, 14).

10. A facility apparatus **characterized by** comprising the anticorrosion performance degradation detection device according to any one of claims 1 to 9, wherein the facility apparatus is an air-conditioning system or the like including a refrigeration cycle formed by connecting a compressor, a condenser, expansion means, an evaporator, and the like through a pipe to circulated a refrigerant therethrough.

**Patentansprüche**

1. Vorrichtung zur Erkennung der Verschlechterung der Anti-Korrosionsleistung zum Nachweis des Einschlusses eines korrosiven Faktors in einem Lösungsmittel (21), dem ein Korrosionsinhibitor zur Hemmung der Korrosion eines Antikorrosionszielmaterials zugesetzt ist, wobei die Vorrichtung zur Erkennung der Verschlechterung der Anti-Korrosionsleistung **gekennzeichnet ist durch** das Aufweisen:

- einer Detektionselektrode (1), die dazu ausgelegt ist, mit dem in dem Lösungsmittel (21) gelösten Korrosionsinhibitor zu reagieren, um auf einer Oberfläche davon eine Elektrodenoberflächenbeschichtung zu bilden, die Korrosion hemmt;
- einer Gegenelektrode (2), die so angeordnet ist, dass sie der Detektionselektrode (1) mit einem vorbestimmten Abstand dazwischen gegenüberliegt;
- einer Stromversorgung (4), die geeignet ist, eine Wechselspannung und eine Gleichspannung zwischen der Detektionselektrode (1) und der Gegenelektrode (2) anzulegen; und
- eines Sensors (16), der angepasst ist, die Impedanz der Detektionselektrode (1) in mindestens einem Niederfrequenzbereich und einem mittleren Frequenzbereich bei dem Niederfrequenzbereich, dem mittleren Frequenzbereich und einem Hochfrequenzbereich zu messen, wobei die Stromversorgung (4) so ausgelegt ist, dass sie die Gleichspannung anlegt, wenn die Impedanz im mittleren Frequenzbereich von einem ersten vorbestimmten Wert abnimmt, und dass sie die angelegte Gleichspannung freigibt, wenn die Impedanz im mittleren Frequenzbereich von einem zweiten vorbestimmten Wert abnimmt, wobei der Sensor (16) dazu ausgelegt ist, zu messen, ob die Impedanz der Detektionselektrode (1) im Niederfrequenzbereich von einem dritten vorbestimmten Wert nach dem Freiwerden der angelegten Gleichspannung abnimmt,

wobei der mittlere Frequenzbereich zwischen 1 Hz und 1 kHz liegt,
wobei der Niederfrequenzbereich weniger als 1 Hz beträgt, und
wobei der Hochfrequenzbereich mehr als 1 kHz beträgt.

2. Vorrichtung zur Erkennung nach Anspruch 1, **dadurch gekennzeichnet, dass** sie ferner eine Meldeeinrichtung (16) zum Melden von Information, die den Einschluss des Korrosionsfaktors anzeigt, aufweist, wenn die Impedanz der Detektionselektrode (1) im Niederfrequenzbereich von dem dritten vorbestimmten Wert abfällt.

3. Vorrichtung zur Erkennung nach Anspruch 2, **dadurch gekennzeichnet, dass** die von der Stromversorgung (4) angelegte Gleichspannung 0,27 V oder mehr in Bezug auf ein Ruhepotential der Detektionselektrode (1) ist.

4. Vorrichtung zur Erkennung nach Anspruch 2 oder 3,

**EP 3 032 245 B1**

**dadurch gekennzeichnet, dass** die Stromversorgung (4) so ausgelegt ist, dass sie das Anlegen und Freigeben der Gleichspannung periodisch wiederholt.

5. Vorrichtung zur Erkennung nach einem der Ansprüche 1 bis 4,
**gekennzeichnet durch** das weitere Aufweisen einer Vorrichtung, die angepasst ist, eine Flüssigkeitseigenschaft des Lösungsmittels (21) so zu steuern, dass sie einen pH-Wert von pH = 10 oder weniger aufweist.

6. Vorrichtung zur Erkennung nach Anspruch 1,
**dadurch gekennzeichnet, dass** die Stromversorgung (4) so ausgelegt ist, dass sie anstelle des Anlegens der Gleichspannung für eine Sekunde oder mehr eine Wechselspannung mit einer Frequenz in einem Bereich von 0,01 Hz bis 1 Hz anlegt.

7. Vorrichtung zur Erkennung nach Anspruch 6,
**dadurch gekennzeichnet, dass** die anstelle des Gleichstroms angelegte Wechselspannung 0,27 V oder mehr in Bezug auf ein Ruhepotential der Detektionselektrode (1) beträgt.

8. Warmwasserversorgungs- und Heizsystem (100),
**dadurch gekennzeichnet, dass** es aufweist:

die Vorrichtung zur Erkennung der Verschlechterung der Anti-Korrosionsleistung nach einem der Ansprüche 1 bis 7;
eine Umwälzpumpe (11), die geeignet ist, das Lösungsmittel (21) umzuwälzen; und
eine Zirkulationsleitung (12), die geeignet ist, die Zirkulationspumpe (11) und ein Kühlziel (15) zu verbinden, wobei das Lösungsmittel (21) durch die Zirkulationsleitung (12) zirkuliert,
wobei ein Teil der Zirkulationsleitung (12) als Bypassleitung (13, 14) mit der Vorrichtung zur Erkennung der Verschlechterung der Anti-Korrosionsleistung verbunden ist.

9. System (100) nach Anspruch 8,
**dadurch gekennzeichnet, dass** die Gegenelektrode (2) ein Abschnitt eines Rohrs der Bypassleitung (13, 14) ist und die Detektionselektrode (1) in einem Zentrum des Rohrs der Bypassleitung (13, 14) angeordnet ist.

10. Anlageneinrichtung, **gekennzeichnet durch** das Aufweisen der Vorrichtung zur Erkennung der Verschlechterung der Anti-Korrosionsleistung nach einem der Ansprüche 1 bis 9,
wobei die Anlageneinrichtung ein Klimatisierungssystem oder dergleichen ist, das einen Kältekreislauf einschließt, der durch Verbinden eines Kompressors, eines Kondensators, eines Expansionsmittels, eines Verdampfers und dergleichen durch ein Rohr gebildet ist, um ein Kältemittel durch dieses hindurch zirkulieren zu lassen.

## Revendications

1. Dispositif de détection de dégradation de performance anticorrosion destiné à détecter une inclusion d'un facteur de corrosion dans un solvant (21) auquel est ajouté un inhibiteur de corrosion destiné à inhiber une corrosion d'un matériau cible anticorrosion, le dispositif de détection de dégradation de performance anticorrosion étant **caractérisé en ce qu'**il comprend :

- une électrode de détection (1) qui est adaptée pour réagir avec l'inhibiteur de corrosion dissous dans le solvant (21) pour former sur une surface de celle-ci un revêtement de surface d'électrode qui inhibe une corrosion ;
- une électrode antagoniste (2) disposée de manière à faire face à l'électrode de détection (1) avec une distance prédéterminée entre les deux ;
- une alimentation de puissance (4) qui est adaptée pour appliquer une tension CA et une tension CC entre l'électrode de détection (1) et l'électrode antagoniste (2) ; et
- un capteur (16) qui est adapté pour mesurer une impédance de l'électrode de détection (1) dans au moins une plage de basses fréquences et une plage de moyennes fréquences parmi la plage de basses fréquences, la plage de moyennes fréquences et une plage de hautes fréquences,
dans lequel l'alimentation de puissance (4) est adaptée pour appliquer la tension CC quand l'impédance dans la plage de moyennes fréquences diminue depuis une première valeur prédéterminée, et pour libérer la tension CC appliquée quand l'impédance dans la plage de moyennes fréquences diminue depuis une seconde valeur prédéterminée,
dans lequel le capteur (16) est adapté pour mesurer si l'impédance de l'électrode de détection (1) dans la plage de basses fréquences diminue depuis une troisième valeur prédéterminée après la libération de la tension CC appliquée,
dans lequel la plage de moyennes fréquences est entre 1 Hz et 1 kHz,
dans lequel la plage de basses fréquences est inférieure à 1 Hz, et
dans lequel la plage de hautes fréquences est supérieure à 1 kHz.

2. Dispositif de détection selon la revendication 1,
**caractérisé en ce qu'**il comprend en outre un moyen de notification (16) destiné à notifier une information indiquant une inclusion du facteur de corrosion quand l'impédance de l'électrode de détection (1) dans la plage de basses fréquences diminue depuis la troisième valeur prédéterminée.

3. Dispositif de détection selon la revendication 2, **caractérisé en ce que** la tension CC appliquée par l'alimentation de puissance (4) est 0,27 V ou plus par rapport à un potentiel de repos de l'électrode de détection (1).

4. Dispositif de détection selon la revendication 2 ou 3, **caractérisé en ce que** l'alimentation de puissance (4) est adaptée pour répéter l'application et la libération de la tension CC périodiquement.

5. Dispositif de détection selon l'une quelconque des revendications 1 à 4, **caractérisé en ce qu'**il comprend en outre un dispositif qui est adapté pour commander une propriété liquide du solvant (21) pour avoir une valeur pH de pH = 10 ou moins.

6. Dispositif de détection selon la revendication 1, **caractérisé en ce que** l'alimentation de puissance (4) est adaptée pour appliquer, pendant une seconde ou plus, une tension CA ayant une fréquence dans une plage de 0,01 Hz à 1 Hz au lieu d'appliquer la tension CC.

7. Dispositif de détection selon la revendication 6, **caractérisé en ce que** la tension CA appliquée au lieu de la tension CC est 0,27 V ou plus par rapport à un potentiel de repos de l'électrode de détection (1).

8. Système de chauffage et d'alimentation d'eau chaude (100) **caractérisé en ce qu'**il comprend :

   le dispositif de détection de dégradation de performance anticorrosion selon l'une quelconque des revendications 1 à 7 ;
   une pompe de circulation (11) qui est adaptée pour faire circuler le solvant (21) ; et
   une conduite de circulation (12) qui est adaptée pour connecter la pompe de circulation (11) et une cible de refroidissement (15), le solvant (21) circulant à travers la conduite de circulation (12), dans lequel une partie de la conduite de circulation (12) est connectée au dispositif de détection de dégradation de performance anticorrosion sous forme de conduite de bypass (13, 14).

9. Système (100) selon la revendication 8, **caractérisé en ce que** l'électrode antagoniste (2) est une portion d'un tube de la conduite de bypass (13, 14), et l'électrode de détection (1) est disposée à un centre du tube de la conduite de bypass (13, 14).

10. Appareil d'équipement **caractérisé en ce qu'**il comprend
    le dispositif de détection de dégradation de performance anticorrosion selon l'une quelconque des revendications 1 à 9,
    dans lequel l'appareil d'équipement est un système de conditionnement d'air ou similaire incluant un cycle de réfrigération formé en connectant un compresseur, un condenseur, un moyen d'expansion, un évaporateur, et similaires à travers un tube pour faire circuler un réfrigérant à travers celui-ci.

# FIG. 1

# FIG. 2

FIG. 3

FIG. 4

# FIG. 5

ELECTRIC FIELD RELEASE
(COATING RESTORATION)

ELECTRIC FIELD APPLICATION
(COATING DECOMPOSITION)

# FIG. 6A

# FIG. 6B

# FIG. 6C

# FIG. 7

- - - - LOW FREQUENCY SIDE
——— MEDIUM FREQUENCY SIDE

DETECTION OF
INCLUSION OF
CORROSIVE FACTOR

INCLUSION
OF IMPURITY

1

IMPEDANCE

COATING
FORMATION
PERIOD

COATING
STABILIZATION
PERIOD

ELECTRODE
CORROSION
PROGRESS PERIOD

APPLICATION  RELEASE
DC VOLTAGE

TIME

# FIG. 8

- - - - LOW FREQUENCY SIDE
——— MEDIUM FREQUENCY SIDE

INCLUSION
OF IMPURITY

1

IMPEDANCE

COATING
FORMATION
PERIOD

COATING
STABILIZATION
PERIOD

COATING
STABILIZATION
PERIOD

APPLICATION  RELEASE
DC VOLTAGE

TIME

# FIG. 9

# FIG. 10

```
                    ┌──────────────┐
                    │    START     │
                    └──────┬───────┘
                           ↓
                  ┌──────────────────┐  S1
                  │ START OF OPERATION│
                  └──────┬───────────┘
                         ↓
```

**S2** — MEASUREMENT, DATA ACQUISITION, AND MONITORING OF IMPEDANCE RESPONSE IN APPLICATION OF AC VOLTAGE IN MEDIUM FREQUENCY RANGE

**S3** — DECREASE IN IMPEDANCE? — NO

YES

**S4** — OPERATION OF APPLICATION AND RELEASE OF DC VOLTAGE

**S5** — SWITCH TO APPLICATION OF AC VOLTAGE IN LOW FREQUENCY RANGE, AND MEASUREMENT, DATA ACQUISITION, AND MONITORING OF IMPEDANCE RESPONSE

**S6** — DECREASE IN IMPEDANCE? — NO

YES

**S7** — DISPLAY AND NOTIFICATION OF INCLUSION OF CORROSIVE FACTOR BY ALARM INDICATION OR THE LIKE

**S8** — STOP OF OPERATION

**S9** — IMPURITY REMOVAL OPERATION (MAINTENANCE) IN SYSTEM BY CIRCULATING LIQUID EXCHANGE, PIPE CLEANING, PARTS REPLACEMENT OR THE LIKE

EP 3 032 245 B1

# FIG. 11

# FIG. 12

26

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S59060351 A
- JP 2012220288 A
- WO 2010078548 A
- WO 2013065207 A